(19)

**Europäisches Patentamt**

**European Patent Office**

**Office européen des brevets**

(11) **EP 2 612 547 B1**

(12) **EUROPEAN PATENT SPECIFICATION**

(45) Date of publication and mention of the grant of the patent:
**16.03.2016 Bulletin 2016/11**

(21) Application number: **11821982.3**

(22) Date of filing: **30.08.2011**

(51) Int Cl.:
**B22F 1/00** *(2006.01)* **A01C 1/06** *(2006.01)*

(86) International application number:
**PCT/JP2011/070091**

(87) International publication number:
**WO 2012/029969 (08.03.2012 Gazette 2012/10)**

(54) **IRON POWDER FOR COATING SEEDS, AND SEEDS**

EISENPULVER ZUR BESCHICHTUNG VON SAATGUT UND SAATGUT

POUDRE DE FER UTILISABLE EN VUE DE L'ENROBAGE DE SEMENCES ET SEMENCES AINSI ENROBÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2011 JP 2011158024**
**31.08.2010 JP 2010193337**

(43) Date of publication of application:
**10.07.2013 Bulletin 2013/28**

(73) Proprietor: **JFE Steel Corporation**
**Tokyo 100-0011 (JP)**

(72) Inventors:
• **KAWANO, Takashi**
**Tokyo 100-0011 (JP)**

• **FUJINAGA, Masashi**
**Tokyo 100-0011 (JP)**

(74) Representative: **Grünecker Patent- und Rechtsanwälte**
**PartG mbB**
**Leopoldstraße 4**
**80802 München (DE)**

(56) References cited:
**EP-A1- 0 559 987       WO-A1-2012/046865**
**WO-A1-2012/108512       GB-A- 2 293 744**
**JP-A- 54 114 500       JP-A- 2005 192 458**
**JP-A- 2005 192 458       US-A- 3 460 492**

**Description**

[Technical Field]

The present invention relates to a seed coated with an iron powder.

[Background Art]

Such a seed is for instance known from patent literature (PTL1)= which disclosure is discussed hereinafter.

Laborsaving in agricultural work and the reduction of production costs of agricultural products have become issues to be solved because of the aging of farmers and the global distribution of agricultural commodities. In order to solve the issues, for example, the following methods are increasingly used for wet-rice cultivation: direct seeding methods in which seeds are directly sown in agricultural fields for the purpose of avoiding raising seedlings and implantation. In particular, a method using seeds coated with an iron powder for the purpose of allowing the seeds to have an increased specific gravity is attracting much attention because the method has merits that the suspension and outflow of the seeds in paddy fields are prevented and bird damage is also prevented.

In order to make use of a direct seeding method using such seeds coated with an iron powder, coatings of the iron powder need to be unlikely to be peeled off during transportation or sowing. If the iron powder coatings are peeled off, the seeds will have a reduced specific gravity and therefore the above merits cannot be obtained. The peeled iron powder coatings cause pipes to be blocked or rotational mechanical parts to be bitten. The peeled fine iron powder causes dust. Therefore, the peeling of the iron powder coatings needs to be prevented as much as possible.

As for techniques for applying and fixing iron powders to rice seeds, Patent Literature 1 discloses the following method: "A method for producing an iron powder-coated rice seed, comprising adding an iron powder, a sulfate (other than calcium sulfate), and/or a chloride to a rice seed, the amount of the sulfate and/or chloride being 0.5% to 2% of the mass of the iron powder; performing granulation by the addition of water; applying the iron powder to the rice seed to fix the iron powder to the rice seed with rust produced by the oxidation of the metallic iron powder supplied with water and oxygen; and drying the rice seed" (see Claim 1 of Patent Literature 1).

In the invention disclosed in Patent Literature 1, rice seeds are sown with a power sprayer or a sowing machine and therefore need to have sufficient strength so as not to be broken by mechanical impact. A coated rice seed produced by the method disclosed therein is measured by a method (hereinafter referred to as the coating breakage test) for measuring the degree of breakage of a coating, whereby an obtained coating is confirmed to have practical strength. In the coating breakage test, mechanical impact is applied to a seed in such a manner that the seed is dropped on a steel sheet with a thickness of 3 mm from a height of 1.3 m five times.

In Patent Literature 1, the particle size distribution of the iron powder is not particularly specified; however, in the case of using of iron powders, shown in Table 1, having a particle size distribution below to form coatings, every coating can maintain practical impact strength as measured by the coating breakage test for the iron powder-coated rice seed.

[Table 1]

| Type of iron powder | Particle size distribution (mass percent) | | | | | |
|---|---|---|---|---|---|---|
| | 45 $\mu$m or less | More than 45 $\mu$m to 63 $\mu$pm or less | More than 63 $\mu$m to 75 $\mu$m or less | More than 75 $\mu$m to 106 $\mu$m or less | More than 106 $\mu$m to 150 $\mu$m or less | More than 150 $\mu$m to 180 $\mu$m or less |
| DSP317 | 85 | 15 | 0 | 0 | 0 | 0 |
| 270M-200 | 34.1 | 43.2 | 14.6 | 6.1 | 1.1 | 0.9 |
| DNC-300 | 85 | 10 | 5 | 0 | 0 | 0 |
| Atomized | 180 $\mu$m or less (unspecified) | | | | | |

[Citation List]

[Patent Literature]

[PTL 1] JP 2005 192458 A [Non

Patent Literature]

[NPL 1] Takamasa Mesaki, Okome no Bishiteki Kouzou wo Mirur Japanese Society of Taste Technology, 2006, pp. 20-21

[NPL 2] Minoru Yamauchi, Tetsu Koutingu Tansui Jikamaki Manyuaru 2010, National Agriculture and Food Research Organization, National Agricultural Research Center for Western Region, March 2010

[NPL 3] Japan Powder Metallurgy Association, JPMA P 11- 1992 Kinzoku Appuntai no Ratora-chi Sokutei Houhou, 1992

[Summary of Invention]

[Technical Problem]

The inventors have newly found problems with conventional techniques as described below.

In Patent Literature 1, the breakage of the iron powder coating due to the impact caused by dropping during seeding is discussed in relation to the adhesion strength of the iron powder coating. Therefore, the following test is described as a strength test: a breakage test in which mechanical impact is applied to a seed in such a manner that the seed is dropped on a steel sheet with a thickness of 3 mm from a height of 1.3 m five times.

However, rice seeds receive mechanical external force during not only seeding but also transportation as described above. Examples of the mechanical external force received by the rice seeds during transportation include the impact due to dropping and the sliding and rolling friction forces caused between the rice seeds or between the rice seeds and a vessel.

When receiving the impact due to dropping, iron powder coatings are cracked and therefore are peeled off. However, when receiving friction force, the iron powder coatings are worn down and are gradually peeled off.

Thus, in order to prevent the peeling of the iron powder coatings during not only seeding but also transportation, the iron powder coatings need to have strength against friction force.

However, there has been no iron powder capable of covering rice seeds with sufficient strength against the sliding or rolling friction force of the rice seeds or no technique for achieving a seed coated with such an iron powder.

As shown in Table 1, the percentage of particles with a size of 63 $\mu$m or less in each iron powder disclosed in Patent Literature 1 is large.

In the case of using a fine iron powder, the iron powder reacts with oxygen to produce heat, which may possibly damage seeds coated with the iron powder. In the case of handling a large amount of the fine iron powder, measures against fires are necessary. In addition, since the fine iron powder is likely to cause dust, there is a problem in that it is difficult to maintain a clean working environment.

The present invention has been made to solve such problems and has an object to provide a seed coated with an iron powder, capable of forming a coating from which the iron powder is unlikely to drop during not only seeding but also transportation.

The present invention has an object to provide a seed coated with an easily-handled iron powder, unlikely to damage rice seeds.

[Solution to Problem]

The above mentioned objectives are met by providing a coated seed according to claim 1.

The inventors have observed the surfaces of rice seeds to investigate that what kind of iron powder is effective in preventing delamination.

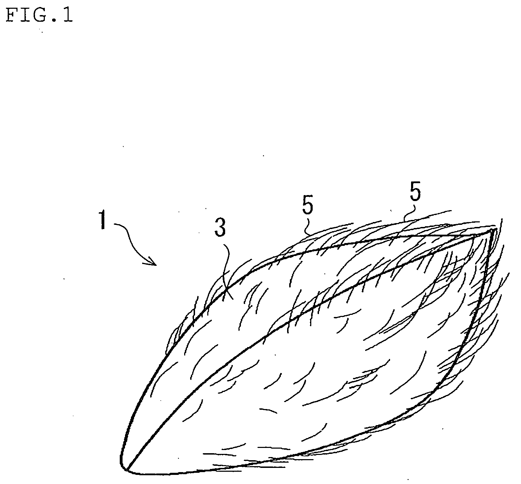

The inventors have focused on the surface condition of rice seeds. As shown in Fig. 1, the surface of a husk 3 that is the outermost shell of a seed grain 1 of rice has hairs 5. In the case of coating the seed grain 1 with an iron powder, the adhesion therebetween is probably increased because the iron powder placed between the hairs 5 is held with the hairs 5 by the elastic action of the hairs 5.

As described in page 21 of Takamasa Mesaki, *"Okome no Bishiteki Kouzou wo Miru"* (Non-Patent Literature 1), the hairs 5 are densely or sparsely arranged. In particular, the iron powder placed in a site in which the hairs 5 are densely arranged is held with the hairs 5 and therefore the adhesion therebetween is probably increased. The intervals between the hairs 5 arranged in this site are 50 $\mu$m to 150 $\mu$m.

Therefore, the inventors have believed that the particle size of an iron powder capable of tightly adhering to rice.seeds by the holding action of the hairs 5 is within an appropriate range. The inventors have investigated iron powders for particle size and have then found that an iron powder with a particle size of more than 63 $\mu$m to 150 $\mu$m is preferable.

From this, the inventors have found that the presence of particles with a size of more than 63 $\mu$m to 150 $\mu$m allows retention due to the hairs 5 to be expected and also allows the amount of coatings peeled off due to the sliding or rolling of seeds to be reduced.

Furthermore, the inventors investigated the adhesion of rice seeds by the holding power of the hairs 5 and the particle size of an iron powder which passes between the hairs 5 to directly adhere to the surfaces of rice seeds.

In general, powders with smaller particle sizes have higher adhesion to targets. Therefore, in order to allow an iron powder to directly adhere to the surfaces of rice seeds, the iron powder preferably has a smaller particle size.

The inventors investigated the particle size of an iron powder which can be expected to pass between hairs 5 of rice seeds to directly adhere to the surfaces of the rice seeds and have then found that a predetermined amount of an iron powder with a particle size of 45 $\mu$m or less is preferably contained.

The inventors have found that when the iron powder with such a fine particle size is contained in addition to an iron powder held with the hairs 5, the iron powder with such a fine particle size adhere to the surfaces of rice seeds and the iron powder is held with the hairs 5 at upper positions. This allows the rice seeds to be doubly coated with these iron powders, thereby allowing the amount of coatings peeled off due to the sliding or rolling of the rice seeds to be reduced.

However, the presence of a large amount of the iron powder with such a fine particle size causes the above-mentioned problems; hence, the amount thereof needs to be not more than a predetermined value.

When an iron powder has an extremely large particle size, this iron powder is unlikely to enter spaces between the hairs 5 and the gravity acting on particles of this iron powder is large. Therefore, the adhesion effect thereof is probably small because the hairs 5 cannot hold the iron powder particles. The inventors have found that the percentage of an iron powder with a particle size of 150 $\mu$m or more needs to be not more than a predetermined value.

The above investigations have been described using rice seeds as examples. Advantageous effects of the present invention can be expected for other seeds which have hairs on the surfaces thereof like the rice seeds and in which the arrangement (interval or the like) of the hairs is similar to that of the rice seeds. Examples of a seed having hairs on the surface thereof include wheat seeds, carrot seeds, and tomato seeds.

The present invention has been made on the basis of the above findings. The inventive seed is defined in claim 1.

Preferred embodiments are defined in the dependent claims.

The seed more preferably includes an iron powder layer which is directly close to the surface of the seed and which has a fine particle size (preferably an average particle size of 45 $\mu$m or less and more preferably 10 $\mu$m to 30 $\mu$m) and a second iron powder layer which is located above the iron powder layer, which is held with hairs owned by the seed, and which has a course particle size (preferably an average particle size of 63 $\mu$m to 150 $\mu$m).

[Advantageous Effects of Invention]

An iron powder for coating a seed according to the present invention is characterized in that the mass percentage of an iron powder with a particle size of 63 $\mu$m or less is 0% to 75%, the mass percentage of an iron powder with a particle size of more than 63 $\mu$m to 150 $\mu$m is 25% to 100%, and the mass percentage of an iron powder with a particle size of more than 150 $\mu$m is 0% to 50%. Therefore, the iron powder can be expected to be held with hairs of haired seeds such as rice seeds and can form a coating from which the iron powder is unlikely to drop during not only seeding but also transportation.

This enables laborsaving in agricultural work and the reduction of production costs of agricultural products.

[Brief Description of Drawings]

[Fig. 1] Fig. 1 is an illustration showing the surface condition of a rice seed.

[Description of Embodiments]

An iron powder for coating a seed according to the present invention is characterized in that the mass percentage of an iron powder with a particle size of 63 $\mu$m or less is 0% to 75%, the mass percentage of an iron powder with a particle size of more than 63 $\mu$m to 150 $\mu$m is 25% to 100%, and the mass percentage of an iron powder with a particle size of more than 150 $\mu$m is 0% to 50%. The mass percentage refers to the percentage in the amount of the iron powder.

The reason why the mass percentage of the iron powder with a particle size of more than 63 $\mu$m to 150 $\mu$m is set to 25% or more is as described below. The iron powder with a particle size of more than 63 $\mu$m to 150 $\mu$m has a high probability of being held with hairs. When the iron powder contains 25% or more of one with such a particle size, retention due to the hairs can be expected and a coating from which the iron powder is unlikely to drop during not only seeding but also transportation can be achieved. The mass percentage of the iron powder with a particle size of more than 63 μm to 150 μm is preferably 30% or more and more preferably 50% or more.

Since the whole of the iron powder may be substantially more than 63 μm to 150 μm, the upper limit thereof is 100%. The upper limit thereof is preferably 75%.

The reason why the mass percentage of the iron powder with a particle size of 63 μm or less is set to 75% or less is as described below. When the content of an iron powder with a fine particle size is large, this iron powder reacts with oxygen to produce heat, which may possibly damage seeds coated with this iron powder. In the case of handling a large amount of this iron powder, measures against fires are necessary. In addition, when the content of a fine iron powder is large, dust is likely to be caused and therefore it is difficult to maintain a clean working environment. The mass percentage of the iron powder with a particle size of 63 μm or less is preferably 70% or less.

Substantially no (that is, 0%) iron powder with a particle size of 63 μm or less may be contained. The content of the iron powder with a particle size of 63 μm or less need not be excessively reduced with costs. The lower limit thereof is preferably 25%.

A more preferable embodiment regarding the content of the iron powder with a particle size of 63 μm or less is that the mass percentage of an iron powder with a particle size of 45 μm or less is 0% to 30%.

The iron powder with a particle size of 45 μm or less pass between hairs present on the surface of each seed to directly adhere to the seed surface and has high adhesion to the seed surface. Therefore, the presence of a predetermined amount (preferably 5% or more) of the iron powder with a particle size of 45 μm or less allows double coatings to be achieved as described above.

The iron powder with a particle size of 45 μm or less preferably has an average particle size of about 10 μm to 30 μm.

The reason why the mass percentage of the iron powder with a particle size of more than 150 μm is set to 50% or less is that the iron powder with a particle size of more than 150 μm cannot be expected to be held with the hairs or cannot be expected to adhere to the seed surface and therefore the amount of powder with this particle size is reduced. The mass percentage thereof is preferably 20% or less.

Substantially no (that is, 0%) iron powder with a particle size of more than 150 μm may be contained.

The particle size distribution of the iron powder can be evaluated by a method specified in JIS Z 2510-2004 using a sieve.

Examples of a method for producing the iron powder according to this embodiment include a reducing method (an iron powder thereby obtained is referred to as a reduced iron powder) and an atomizing method (an iron powder thereby obtained is referred to as an atomized iron powder). The iron powder may contain about 10% by mass of an alloying component or an impurity and is preferably a so-called pure iron powder containing 90% by mass or more Fe.

A method for coating a seed with the iron powder, which meets the above requirements (the mass percentage of the iron powder with a particle size of 63 μm or less is 0% to 75%, the mass percentage of the iron powder with a particle size of more than 63 μm to 150 μm is 25% to 100%, and the mass percentage of the iron powder with a particle size of more than 150 μm is 0% to 50%), or a method for coating a seed with the iron powder, which meets the above preferable conditions, is not particularly limited.

A manual coating method, a method using a conventionally known mixer, or another method may be used as described in, for example, pages 6 to 14 of "Tetsu Koutingu Tansui Jikamaki Manyuaru 2010 (edited by National Agriculture and Food Research Organization, National Agricultural Research Center for Western Region)" (Non-Patent Literature 2).

Usable examples of the mixer include impeller-type mixers (such as Henschel mixers) and rotary vessel mixers (such as V-type mixers, double-cone mixers, disk pelletizers, and plough share mixers).

A coating cementing agent such as plaster of Paris can be used to coat a seed with the iron powder as described in "Tetsu Koutingu Tansui Jikamaki Manyuaru 2010".

[EXAMPLES]

In order to confirm the effect of an iron powder for coating a seed according to the present invention, rice seeds were coated with Inventive Examples 1 to 9, that is, iron powders with various particle size distributions, in examples of the present invention. Furthermore, rice seeds were coated with Comparative Examples 1 to 4, that is, iron powders with particle size distributions outside the scope of the present invention, in comparative examples.

The coating of each iron powder was performed by a method described in "Tetsu Koutingu Tansui Jikamaki Manyuaru 2010". In particular, the coating thereof was performed as described below.

Seed grains, plaster of Paris, and several types of iron powders were prepared first. In a disk pelletizer, 10 kg of seeds (the seeds grains) were coated with 5 kg of each iron powder and 0.5 kg of plaster of Paris with an appropriate amount of water spayed thereon and were further coated with 0.25 kg of plaster of Paris last.

A method for evaluating the strength of a coating with respect to the sliding or rolling friction of a seed coated with an iron powder has not been established.

Therefore, each coating was checked by a test method described in ″JPMA P 11-1992 Kinzoku Appuntai no Ratora-chi Sokutei Houhou″ (Non-Patent Literature 3). The test method is hereinafter referred to as the rattler test.

In the rattler test, 20 ± 0.05 g of the seeds coated with the iron powder were sealed in a basket of a rattler tester and the basket was then rotated at a rotation speed of 87 ± 10 rpm 1000 revolutions. According to this method, sliding friction and rolling friction are caused between the seeds and between the seeds and an inner surface of the basket because the seeds move in the basket while being rolling.

Thus, the use of this method allows the strength of a coating applied with rolling friction force and sliding friction force in combination to be evaluated.

Table 2 shows the particle size distribution of each iron powder and the rate of decrease in weight of the iron powder as determined by the rattler test. The rate of decrease in weight thereof was determined from the following equation:

$$\text{Rate of decrease in weight} = (\text{mass of coating peeled off in rattler test}) / (\text{mass of seed before test}) \times 100 \ (\%)$$

Thus, a coating with a smaller rate of decrease in weight can be judged to be higher in strength.

[Table 2]

| | Type of iron powder | Particle size distribution (mass percent) | | | | Total of 63 μm or smaller particles (mass percent) | Rate of decrease in weight in rattler test (mass percent) |
|---|---|---|---|---|---|---|---|
| | | 45 μm or less | More than 45 μm to 63 μm or less | More than 63 μm to 150 μm or less | More than 150 μm | | |
| Inventive Example 1 | Reduced iron powder | 23.6 | 14.6 | 59.5 | 2.3 | 38.2 | 3.1 |
| Inventive Example 2 | Reduced iron powder | 26.0 | 20.2 | 53.8 | 0.0 | 46.2 | 2.9 |
| Inventive Example 3 | Reduced iron powder | 16.8 | 13.3 | 67.7 | 2.2 | 30.1 | 2.9 |
| Inventive Example 4 | Reduced iron powder | 1.2 | 6.8 | 91.5 | 0.5 | 8.0 | 3.2 |
| Inventive Example 5 | Atomized iron powder | 34.2 | 14.0 | 39.7 | 12.1 | 48.2 | 3.7 |
| Inventive Example 6 | Atomized iron powder | 28.1 | 14.1 | 50.0 | 7.8 | 42.2 | 3.5 |
| Inventive Example 7 | Atomized iron powder | 8.6 | 19.4 | 31.0 | 41.0 | 28.0 | 3.9 |
| Inventive Example 8 | Reduced iron powder | 33.5 | 31.9 | 33.4 | 1.2 | 65.4 | 3.6 |

(continued)

| | Type of iron powder | Particle size distribution (mass percent) | | | | Total of 63 $\mu$m or smaller particles (mass percent) | Rate of decrease in weight in rattler test (mass percent) |
|---|---|---|---|---|---|---|---|
| | | 45 $\mu$m or less | More than 45 $\mu$m to 63 $\mu$m or less | More than 63 $\mu$m to 150 $\mu$m or less | More than 150 $\mu$m | | |
| Inventive Example 9 | Reduced iron powder | 34.5 | 40.3 | 25.0 | 0.2 | 74.8 | 3.8 |
| Comparative Example 1 | Reduced iron powder | 53.2 | 45.8 | <u>1.0</u> | 0.0 | <u>99.0</u> | 4.4 |
| Comparative Example 2 | Reduced iron powder | 97.6 | 1.2 | <u>0.6</u> | 0.6 | <u>98.8</u> | 5.6 |
| Comparative Example 3 | Reduced iron powder | 37.0 | 41.6 | <u>20.5</u> | 0.8 | <u>78.6</u> | 6.8 |
| Comparative Example 4 | Atomized iron powder | 3.1 | 9.9 | 32.8 | <u>54.2</u> | 13.0 | 13.8 |
| Comparative Example 5 | Reduced iron powder | 34.3 | 42.7 | <u>22.7</u> | 0.3 | <u>77.0</u> | 4.3 |

As shown in Table 2, all of those described in Inventive Examples 1 to 9 are within the range of the particle size distribution of the present invention, the particle size distribution being that "the mass percentage of an iron powder with a particle size of 63 $\mu$m or less is 0% to 75%, the mass percentage of an iron powder with a particle size of more than 63 $\mu$m to 150 $\mu$m is 25% to 100%, and the mass percentage of an iron powder with a particle size of more than 150 $\mu$m is 0% to 50%", and have a rate of decrease in weight of less than 4% as determined by the rattler test.

In contrast, Comparative Examples 1 to 4 are outside the range of the particle size distribution thereof and have a rate of decrease in weight of 4% or more as determined by the rattler test.

This proves that the rate of decrease in weight of an iron powder can be significantly reduced by adjusting the particle size distribution of the iron powder within the scope of the present invention.

In Table 2, values, outside the scope of the present invention, for the particle size distributions of Comparative Examples 1 to 4 are underlined.

In each of Inventive Examples 1, 2, 3, 4, and 6, the mass percentage of an iron powder with a particle size of more than 63 $\mu$m to 150 $\mu$m is 50% or more and the mass percentage of an iron powder with a particle size of 45 $\mu$m or less is 30% or less. The rate of decrease in weight thereof is low, 3.5% or less. These show that the adhesion of an iron powder can be increased in such a manner that the mass percentage of an iron powder with a particle size of more than 63 $\mu$m to 150 $\mu$m is increased and the mass percentage of an iron powder with a particle size of 45 $\mu$m or less is decreased.

[Industrial Applicability]

An iron powder for coating a seed according to the present invention can form a coating from which the iron powder is unlikely to drop during not only seeding but also transportation, thereby enabling laborsaving in agricultural work and the reduction of production costs of agricultural products.

[Reference Signs List]

EP 2 612 547 B1

1    seed grain
3    husk
5    hairs

## Claims

1. A seed coated with an iron powder for coating a seed, wherein the iron powder contains, in percentage by mass, 0% to 75% of an iron powder with a particle size of 63 $\mu$m or less; 25% to 100% of an iron powder with a particle size of more than 63 $\mu$m to 150 $\mu$m; and 0% to 50% of an iron powder with a particle size of more than 150 $\mu$m.

2. The seed according to Claim 1, wherein the iron powder contains, in percentage by mass, 0% to 30% of an iron powder with a particle size of 45 $\mu$m or less.

3. The seed according to Claims 1 or 2, wherein the iron powder contains, in percentage by mass, 50% or more of the iron powder with a particle size of more than 63 $\mu$m to 150 $\mu$m.

4. The seed according to any one of Claims 1 to 3, wherein the iron powder is produced by a reducing method or an atomizing method.

5. The seed according to Claims 1 to 4 being a rice seed.

## Patentansprüche

1. Ein Samen welcher mit einem Eisenpulver zum Beschichten eines Samens beschichtet ist, wobei das Eisenpulver in Masseprozenten

   0% bis 75% eines Eisenpulvers mit einer Teilchengröße von 63 $\mu$m oder weniger;
   25% bis 100% eines Eisenpulvers mit einer Teilchengröße von mehr als 63 $\mu$m bis 150 $\mu$m; und
   0% bis 50% eines Eisenpulvers mit einer Teilchengröße von mehr als 150 $\mu$m enthält.

2. Der Samen nach Anspruch 1, wobei das Eisenpulver in Masseprozenten 0% bis 30% eines Eisenpulvers mit einer Teilchengröße von 45 $\mu$m oder weniger enthält.

3. Der Samen gemäß Anspruch 1 oder 2, wobei das Eisenpulver in Masseprozenten 50% oder mehr des Eisenpulvers mit einer Teilchengröße von mehr als 63 $\mu$m bis 150 $\mu$m enthält.

4. Der Samen nach einem der Ansprüche 1 bis 3, wobei das Eisenpulver durch ein Reduktionsverfahren oder ein Atomisierungsverfahren hergestellt ist.

5. Der Samen gemäß den Ansprüchen 1 bis 4 ist ein Reissamen.

## Revendications

1. Semence enrobée avec une poudre de fer pour le revêtement d'une semence, dans laquelle la poudre de fer contient, en pourcentage en masse, de 0 % à 75 % d'une poudre de fer avec une taille de particule de 63 $\mu$m ou moins ; de 25 % à 100 % d'une poudre de fer avec une taille de particule de plus de 63 $\mu$m et jusqu'à 150 $\mu$m ; et de 0 % à 50 % d'une poudre de fer avec une taille de particule de plus de 150 $\mu$m.

2. Semence selon la revendication 1, dans laquelle la poudre de fer contient, en pourcentage en masse, de 0 % à 30 % d'une poudre de fer avec une taille de particule de 45 $\mu$m ou moins.

3. Semence selon les revendications 1 ou 2, dans laquelle la poudre de fer contient, en pourcentage en masse, 50% ou plus de la poudre de fer avec une taille de particule de plus de 63 $\mu$m et jusqu'à 150 $\mu$m.

4. Semence selon l'une quelconque des revendications 1 à 3, dans laquelle la poudre de fer est produite par un procédé de réduction ou un procédé d'atomisation.

5. Semence selon les revendications 1 à 4 étant une semence de riz

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005192458 A

### Non-patent literature cited in the description

- **TAKAMASA MESAKI.** Okome no Bishiteki Kouzou wo Miru. *Japanese Society of Taste Technology,* 2006, 20-21
- **MINORU YAMAUCHI.** Tetsu Koutingu Tansui Jikamaki Manyuaru 2010. National Agriculture and Food Research Organization, March 2010
- *JPMA P 11- 1992 Kinzoku Appuntai no Ratora-chi Sokutei Houhou,* 1992
- Tetsu Koutingu Tansui Jikamaki Manyuaru. National Agricultural Research Center for Western Region, 2010, 6-14
- *Tetsu Koutingu Tansui Jikamaki Manyuaru,* 2010
- *Kinzoku Appuntai no Ratora-chi Sokutei Houhou,* 11-1992